# EUROPÄISCHE PATENTSCHRIFT

(11) **EP 2 237 381 B1**
(45) Veröffentlichungstag und Bekanntmachung des Hinweises auf die Patenterteilung: **29.10.2014**
(21) Anmeldenummer: 10003496.6
(22) Anmeldetag: 30.03.2010
(51) Int. Cl.: H01R 31/06, H01R 29/00, H02K 3/28, H02K 5/22

(54) **Anschlussvorrichtung zum elektrischen Anschließen eines Drehstrommotors**
Connection device for electric connection of an AC engine
Dispositif de raccordement destiné au raccordement électrique d'un moteur triphasé

(30) Priorität: 31.03.2009 DE 102009015705
(43) Veröffentlichungstag der Anmeldung: 06.10.2010
(73) Patentinhaber: Harting Electric GmbH & Co. KG, 32339 Espelkamp (DE); Murrelektronik GmbH, 71560 Oppenweiler (DE)
(72) Erfinder: Nass, Andreas, 31606 Warmsen (DE); Ferderer, Albert, 32339 Espelkamp (DE)
(74) Vertreter: Prinz & Partner mbB

(56) Entgegenhaltungen:
- EP-A1- 2 086 066
- DE-A1- 3 043 538
- DE-U1-202006 016 472
- FR-A1- 2 617 651
- US-A- 3 525 971

## Beschreibung

Die Erfindung betrifft eine Anschlussvorrichtung zum elektrischen Anschließen eines Drehstrommotors.

Drehstrommotoren, die mindestens drei Wicklungen aufweisen und an ein Drehstromnetz anschließbar sind, das drei elektrische Phasenleitungen mit phasenverschobenen Wechselspannungen aufweist, sind bekannt. Solche Drehstrommotoren werden je nach Anwendungsfall entweder in Sternschaltung oder in Dreieckschaltung verwendet. Je nach gewählter Verschaltung müssen die Enden der Drehstrommotorwicklungen in unterschiedlicher, an sich bekannter Weise mit den Phasenleitungen des Drehstromnetzes verbunden werden. Die Art und Weise, wie die Wicklungen mit den Phasenleitungen verbunden werden, entscheidet ebenfalls über die Drehrichtung des Motors.

Die Verdrahtung erfolgt im Stand der Technik vor Ort manuell in einem sogenannten Motoranschlusskasten, in den die Motorwicklungsanschlüsse und die Phasenleitungen geführt werden. Diese Verdrahtung erfordert viel Zeitaufwand und im Fall der Änderung der Schaltung bzw. der Drehrichtung des Motors ein Umklemmen der entsprechenden Anschlüsse, wobei immer wieder Fehler auftreten. Auch bekannt sind Versuche, zum Anschließen Steckverbinder zu verwenden. Dabei wird teilweise auf den Motoranschlußkasten verzichtet. Eine Änderung der Schaltung sowie eine Drehrichtungsänderung bedarf aber immer einer Umverdrahtung.

EP 2 086 066 offenbart als nachveröffentlichte Druckschrift eine Anschlussvorrichtung zur elektrischen Verbindung eines mehrphasigen Elektromotors mit einem Spannungsanschluss, bestehend aus einem Anschlusskasten und einem im Wesentlichen zylindrischen Adapter.

DE 20 2006 016 472 U1 offenbart eine Anschlusssteckereinheit für Drehstrommotoreinheiten mit einem Brückenschaltungsmodul im Inneren des Steckergehäuses. Im Brückenschaltungsmodul wird eine Brückenschaltung realisiert, welche zur Ansteuerung der Drehstrommotoreinheit mittels Dreiecksschaltung erforderlich ist.

US 3,525,971, FR 2617651 und DE 30 43 538 A1 offenbaren jeweils Steckverbinder, die entweder durch verdrehten Einbau oder durch Zwischensetzen eines Adapters eine Drehrichtungsumkehr eines an ein Drehstromnetz angeschlossenen Motors bewirken können.

Es ist ein Ziel der Erfindung, den Motoranschlusskasten, auch bekannt als Motorklemmkasten, überflüssig zu machen. Es ist auch ein Ziel der Erfindung, die elektrische Verschaltung kabelseitig durch eine Anschlussvorrichtung zu ermöglichen, mit der vor Ort sowohl die Drehrichtung des Motors als auch die Art der verwendeten Schaltung gewählt werden kann, ohne dass ein manuelles Umklemmen/Umverdrahten der Motorwicklungsenden bei einer Schaltungs- oder Drehrichtungsänderung des Motors nötig ist.

Dieses Ziel ist mit zwei alternativen Lösungen gemäss Anspruch 1 und Anspruch 2 erreicht.

Die Erfindung stellt eine Anschlussvorrichtung zum elektrischen Anschließen eines Drehstrommotors mit mindestens drei Wicklungen an ein Drehstromnetz zur Verfügung, die eine Netzanschlusseinheit zum Anschließen der Phasenleitungen des Drehstromnetzes und eine Motoranschlusseinheit zum Anschließen der mindestens sechs Wicklungsenden des Drehstrommotors umfasst. Ein auswechselbares Verbindungsmodul ist zwischen Netzanschlusseinheit und Motoranschlusseinheit angeordnet und enthält Kontakte und Verdrahtungselemente, die die sechs Wicklungsenden in vorgegebener Weise mit den drei Phasenleitungen des Drehstromnetzes elektrisch verbinden. Es ist damit kein Motoranschlusskasten mehr nötig, in dem Umklemmarbeiten durchgeführt werden müssen, um die Verschaltung zu verändern. Über das auswechselbare Verbindungsmodul wird die gewünschte Verschaltung vor Ort realisiert, ohne dass Leiter aufwendig kontaktiert werden müssen.

In der Ausführungsform gemäß Anspruch 1 ist ein erstes Verbindungsmodul vorgesehen, das die drei Wicklungen des Drehstrommotors in einer Dreieckschaltung verbindet, und es ist ein zweites Verbindungsmodul vorgesehen, das die drei Wicklungen in einer Sternschaltung verbindet. Um von einer Dreieckschaltung auf eine Sternschaltung umzuwechseln, müssen also nicht die Anschlüsse der Wicklungsenden auf der Motorseite der Motoranschlusseinheit gelöst werden, und auch die Phasenanschlüsse an der Netzanschlusseinheit bleiben unberührt. Es muss lediglich das Verbindungsmodul ausgewechselt werden.

Das Verbindungsmodul, bzw. jedes der Verbindungsmodule, kann entlang einer Verbindungsrichtung, das heißt entlang einer Achse, die von der Netzanschlusseinheit zur Motoranschlusseinheit führt, um 180° verdreht eingebaut werden. Durch diese Verdrehung des Verbindungsmoduls wird die Drehrichtung des Motors umgekehrt. Auch bei einer Drehrichtungsänderung bleiben also die Anschlüsse an der Netzanschlusseinheit und an der Motoranschlusseinheit unberührt.

Vorzugsweise weist die Netzanschlusseinheit für jede der drei Phasenleitungen einen Anschluss auf, der in Richtung des Verbindungsmoduls in zwei parallele Phasenkontakte verzweigt, wobei das Verbindungsmodul bzw. jedes der Verbindungsmodule jeweils nur einen der parallelen Phasenkontakte elektrisch kontaktiert.

In einer bevorzugten Ausführungsform weist die Motoranschlusseinheit auf der dem Verbindungsmodul zugewandten Seite Wicklungskontakte zu den sechs Wicklungsenden auf, die in zwei Gruppen von je drei Wicklungskontakten angeordnet sind, die zueinander punktsymmetrisch liegen. Hierbei kann es sich um eine Anordnung auf zwei parallelen Geraden handeln, oder die Wicklungsenden können auch jeweils halbkreisförmig angeordnet sein, wobei sich die zwei Halbkreise beispielsweise zu einem Kreis schließen.

In der ersten Gruppe liegen der Wicklungsanfang einer ersten Wicklung, das Wicklungsende einer dritten Wicklung und der Wicklungsanfang der dritten Wicklung nebeneinander, und in der zweiten Gruppe liegt das Wicklungsende der ersten Wicklung punktsymmetrisch zum Wicklungsanfang der ersten Wicklung, der Wicklungsanfang der zweiten Wicklung liegt punktsymmetrisch zum Wicklungsende der dritten Wicklung und das Wicklungsende der zweiten Wicklung liegt punktsymmetrisch zum Wicklungsanfang der dritten Wicklung. Hierdurch ist gewährleistet, dass bei einer Drehung des Verbindungsmoduls um 180° eine Drehrichtungsänderung des Motors erfolgt, da damit andere Wicklungsanfänge bzw. Wicklungsenden die Phasenleitungen kontaktieren.

In der Ausführungsform gemäß Anspruch 2 umfasst das Verbindungsmodul ein austauschbares Brückenmodul, das die Verdrahtungselemente enthält. Es ist ein erstes Brückenmodul vorgesehen, das Verdrahtungselemente dergestalt enthält, dass die drei Wicklungen des Motors in einer Dreieckschaltung verbunden werden. Es ist ferner ein zweites Brückenmodul vorgesehen, das Verdrahtungselemente enthält, so dass die drei Motorwicklungen in einer Sternschaltung verbunden werden. Bei dieser Ausführungsform muss nur ein Teil des Verbindungsmoduls ausgetauscht werden, um die Verschaltung zu verändern. Es kann aber natürlich auch das ganze Verbindungsmodul, das beispielsweise mit dem ersten Brückenmodul versehen ist, gegen ein anderes Verbindungsmodul ausgetauscht werden, das mit dem zweiten Brückenmodul versehen ist.

Die Netzanschlusseinheit kann zum Anschließen der Phasenleitungen des Drehstromnetzes an dem Verbindungsmodul in zwei um 180° gegeneinander verdrehten Lagen angebaut werden. Durch die Verdrehung der Netzanschlusseinheit kann eine Drehrichtungsänderung des Motors herbeigeführt werden.

Die Anschlussvorrichtung ist für beide Ausführungsformen quaderförmig gestaltet.

Vorzugsweise werden die Phasenleitungen des Drehstromnetzes an der Netzanschlusseinheit fest angeschlossen. Vorzugsweise erfolgt dies über Klemmfederverbindungen.

Die Anschlussvorrichtung ist weiterhin vorzugsweise so gestaltet, dass die sechs Wicklungsenden an der Motoranschlusseinheit fest angeschlossen werden können, vorzugsweise als Crimpanschluss.

Die Erfindung wird nachfolgend anhand von zwei bevorzugten Ausführungsformen beschrieben, die in den beigefügten Zeichnungen dargestellt sind. In diesen zeigen:
- Figur 1 in einer schematisierten 3-D-Darstellung eine Motoranschlusseinheit, ein Verbindungsmodul und eine Netzanschlusseinheit gemäß einer ersten Ausführungsform der Erfindung;
- Figur 2 in einer schematisierten 3-D-Darstellung eine Anschlussvorrichtung entsprechend Figur 1 aus einer anderen Blickrichtung;
- Figur 3 eine schematisierte 3-D-Darstellung eines Verbindungsmoduls und einer Netzanschlusseinheit;
- Figur 4a ein elektrisches Schaltbild zur Verschaltung der drei Motorwicklungen mit den drei Phasenleitungen bei einer Dreieckschaltung in einer ersten Drehrichtung;
- Figur 4b eine schematisierte Darstellung zur Realisierung der in Figur 4a gezeigten Schaltung mit der Anschlussvorrichtung gemäß Figuren 1 bis 3;
- Figur 5a ein elektrisches Schaltbild zur Verschaltung der Motorwicklungen mit den Phasenleitungen bei einer Dreieckschaltung für eine zweite Drehrichtung;
- Figur 5b eine schematisierte Darstellung zur Realisierung der in Figur 5a gezeigten Schaltung mit der Anschlussvorrichtung gemäß Figuren 1 bis 3;
- Figur 6a ein elektrisches Schaltbild für die Verschaltung der Motorwicklungen mit den Phasenleitungen für eine Sternschaltung in einer ersten Drehrichtung;
- Figur 6b eine schematisierte Darstellung zur Realisierung der in Figur 6a gezeigten Schaltung mit der Anschlussvorrichtung gemäß Figuren 1 bis 3;
- Figur 7a ein elektrisches Schaltbild für den Anschluss der Motorwicklungen an die Phasenleitungen bei einer Sternschaltung für eine zweite Drehrichtung;
- Figur 7b eine schematisierte Darstellung zur Realisierung der in Figur 7a gezeigten Schaltung mit der Anschlussvorrichtung gemäß Figuren 1 bis 3;
- Figur 8 eine schematisierte 3-D-Darstellung eines zweites Ausführungsbeispiels mit zwei austauschbaren Brückenmodulen ohne die Motoranschlusseinheit;
- Figur 9 die Anschlussvorrichtung der Figur 8 in zusammengebauter Form ohne die Motoranschlusseinheit;
- Figur 10 einen schematisierten Schnitt durch die Anschlussvorrichtung gemäß Figur 9 mit angebauter Motoranschlusseinheit.

### Erstes Ausführungsbeispiel

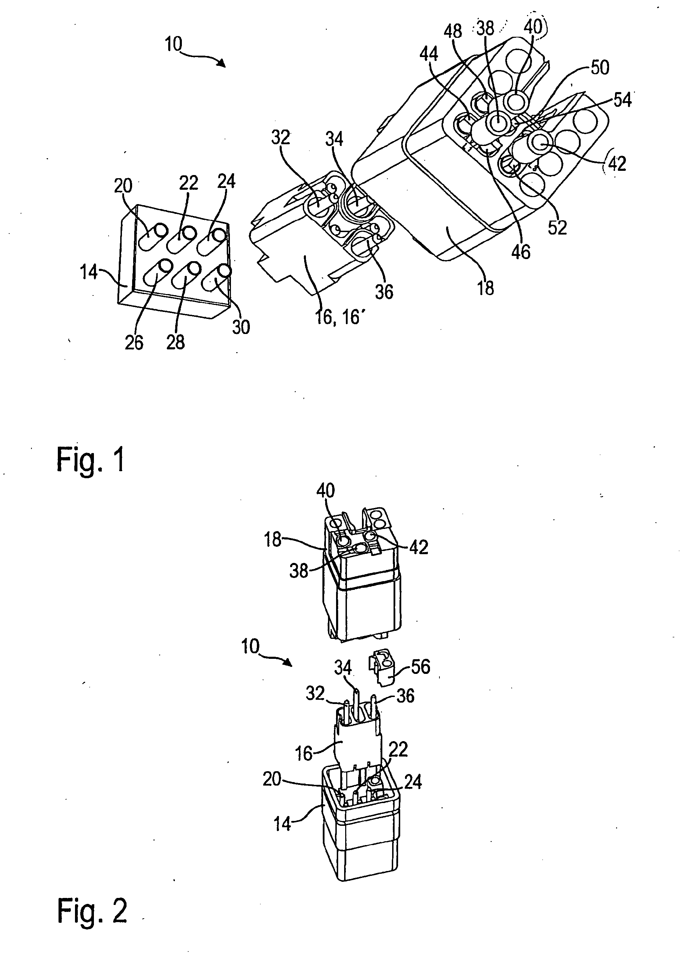

Figur 1 zeigt eine Anschlussvorrichtung 10 eines ersten Ausführungsbeispiels in schematisierter Form. Die Anschlussvorrichtung 10 umfasst eine Motoranschlusseinheit 14, ein auswechselbares Verbindungsmodul 16, 16' sowie eine Netzanschlusseinheit 18, die durch Steckverbindungen miteinander verbunden werden.

Die Motoranschlusseinheit 14 weist auf ihrer dem Verbindungsmodul 16, 16' zugewandten Seite sechs Wicklungskontakte 20, 22, 24, 26, 28 und 30 auf. Auf der anderen, nicht sichtbaren Seite der Motoranschlusseinheit 14 sind Anschlüsse vorgesehen, die mit den Wicklungskontakten 20, 22, 24, 26, 28 und 30 elektrisch verbunden sind und an die die Wicklungsenden eines Drehstrommotors angeschlossen werden können, bevorzugterweise über einen Crimpanschluss. Üblicherweise werden die Motorwicklungen eines Drehstrommotors mit U, V und W bezeichnet, wobei jede Motorwicklung zwei Enden aufweist. Die sechs Wicklungskontakte 20, 22, 24, 26, 28 und 30 sind also mit den Motorwicklungsenden U1, U2, V1, V2, W1 und W2 verbunden. Die sechs Wicklungskontakte sind in zwei Gruppen zu je drei Kontakten angeordnet.

Es wird hier beispielhaft zur Erläuterung der erfindungsgemäßen Anschlussvorrichtung auf einen Drehstrommotor mit drei Wicklungen Bezug genommen. Die Anschlussvorrichtung kann natürlich auch bei mehrpoligen Maschine verwendet werden, bei denen jeweils zwei Wicklungen zu einer Phase gehören.

Das Verbindungsmodul 16, 16' weist auf seiner der Motoranschlusseinheit 14 zugewandten Seite sechs Wicklungsverbindungskontakte auf, die geeignet sind, die Wicklungskontakte 20, 22, 24, 26, 28 und 30 elektrisch zu kontaktieren. Dabei sind die Wicklungsverbindungskontakte auf dem Verbindungsmodul und die Wicklungskontakte auf der Motoranschlusseinheit so in zwei Gruppen angeordnet, dass eine elektrische Kontaktierung in zwei um 180° gegeneinander verdrehten Lagen möglich ist, d.h. die Anordnung der Kontakte muss punktsymmetrisch zu einer Drehachse sein, die von der der Motoranschlusseinheit 14 zugewandten Seite zur der Netzanschlusseinheit 18 zugewandten Seite des Verbindungsmoduls 16, 16' verläuft und um die das Verbindungsmodul gedreht werden kann. Die Wicklungsverbindungskontakte sind in Figur 1 nicht zu sehen. Auf der der Netzanschlusseinheit 18 zugewandten Seite weist das Verbindungsmodul drei Phasenverbindungskontakte 32, 34, 36 auf. Die Phasenverbindungskontakte 32, 34, 36 dienen zum Kontaktieren der Phasenleitungen L1, L2 und L3 eines Drehstromnetzes über die Netzanschlusseinheit 18. Die Phasenverbindungskontakte sind mit den Wicklungsverbindungskontakten, die ihnen gegenüberliegen, elektrisch innerhalb des Verbindungsmoduls 16, 16' verbunden. Dabei sind von der einen Gruppe von Wicklungsverbindungskontakten die zwei äußeren mit den Phasenverbindungskontakten 32 und 36 verbunden und von der anderen Gruppe der mittlere Wicklungsverbindungskontakt mit dem Phasenverbindungskontakt 34. Die anderen Wicklungsverbindungskontakte enden nach außen auf der Seite zur Netzanschlusseinheit 18 hin als Blindkontakte. Die äußeren Kontakte der Verbindungsmodule 16 und 16' unterscheiden sich nicht voneinander. Die Verbindungsmodule unterscheiden sich nur in ihren inneren Verdrahtungselementen, die entweder eine Dreieck- oder eine Sternschaltung realisieren. Um die verschiedenen Verbindungsmodule einfach unterscheiden zu können, können sie mit unterschiedlichen Farben ausgeführt sein, so dass eine einfache optische Unterscheidung möglich ist.

Die Netzanschlusseinheit 18 weist auf ihrer vom Verbindungsmodul 16, 16' abgewandten Seite drei Anschlüsse 38, 40, 42 zum Anschließen der Phasenleitungen L1, L2, L3 des Drehstromnetzes auf. Die Anschlüsse 38, 40, 42 sind vorzugsweise als Klemmfederverbindungsanschlüsse ausgeführt, an die die Phasenleitungen schnell und sicher anschließbar sind.

Die Anschlüsse 38, 40, 42 verzweigen sich wie in Figur 1 ersichtlich jeweils in zwei parallele Anschlüsse, die auf die dem Verbindungsmodul 16, 16' zugewandte Seite der Netzanschlusseinheit 18 geführt sind und dort als Phasenkontakte 44, 46, 48, 50, 52 und 54 enden. Anschluss 38 ist im vorliegenden Beispiel für einen Anschluss der Phasenleitung L1 vorgesehen und verzweigt in Phasenkontakte 44 und 46. Anschluss 40 ist für einen Anschluss der Phasenleitung L2 vorgesehen und verzweigt in Phasenkontakte 48 und 50. Anschluss 42 ist für einen Anschluss der Phasenleitung L3 vorgesehen und verzweigt in Phasenkontakte 52 und 54. Die Netzanschlusseinheit 18 weist damit auf ihrer dem Verbindungsmodul 16, 16' zugewandten Seite sechs Phasenkontakte 44, 46, 48, 50, 52 und 54 auf, wovon jeweils zwei parallele Anschlüsse innerhalb der Netzanschlusseinheit 18 miteinander verbunden sind und die gleiche Phase des Drehstromnetzes kontaktieren.

Die Phasenverbindungskontakte 32, 34, 36 des Verbindungsmoduls 16, 16' und die Phasenkontakte 44, 46, 48, 50, 52 und 54 der Netzanschlusseinheit 18 sind so gestaltet, dass jeweils einer der elektrisch parallel geschalteten Phasenkontakte von den Phasenverbindungskontakten 32, 34, 36 des Verbindungsmoduls 16,16' kontaktiert wird und bei einer Drehung des Verbindungsmoduls um eine Längsachse um 180° der jeweils andere der elektrisch parallel geschalteten Phasenkontakte kontaktiert wird.

Figur 2 zeigt die Anschlussvorrichtung 10 aus einem etwas anderen Blickwinkel. Die Motoranschlusseinheit 14, die in Figur 1 stark schematisiert dargestellt ist, ist hier etwas genauer ausgeführt. Man erkennt in Figur 2 drei der Wicklungskontakte 20, 22, 24, die elektrisch mit den Wicklungsenden des Drehstrommotors verbunden werden können, in der Motoranschlusseinheit 14 auf der dem Verbindungsmodul zugewandten Seite. Das Verbindungsmodul 16, 16' wird in die Motoranschlusseinheit 14 eingesetzt. Ein Kodierstück 56 kann in der Motoranschlusseinheit 14 neben dem Verbindungsmodul 16, 16' platziert werden, um damit eine unbeabsichtigte Verdrehung des Verbindungsmoduls beim Einsetzen zu vermeiden. Wie im Weiteren noch ausgeführt werden wird, kann das Verbindungsmodul 16, 16' in zwei um 180° verdrehten Lagen eingebaut werden, um damit die Drehrichtung des Motors umzukehren.

Die Netzanschlusseinheit 18 weist wie in Figur 1 die Anschlüsse 38, 40, 42 auf. Die Netzanschlusseinheit 18 hat zudem auf der dem Verbindungsmodul abgewandten Seite schematisch angedeutet weitere Anschlüsse. Diese dienen beispielsweise zum Anlegen der Masse, der Schutzerde, zur Realisierung einer Motorbremsfunktion und/oder des Neutralleiters und werden auf der Motoranschlussseite ebenfalls weitergeführt. Sie sind für die Funktion der erfindungsgemäßen Anschlussvorrichtung jedoch ohne Bedeutung und werden daher hier nicht weiter erläutert.

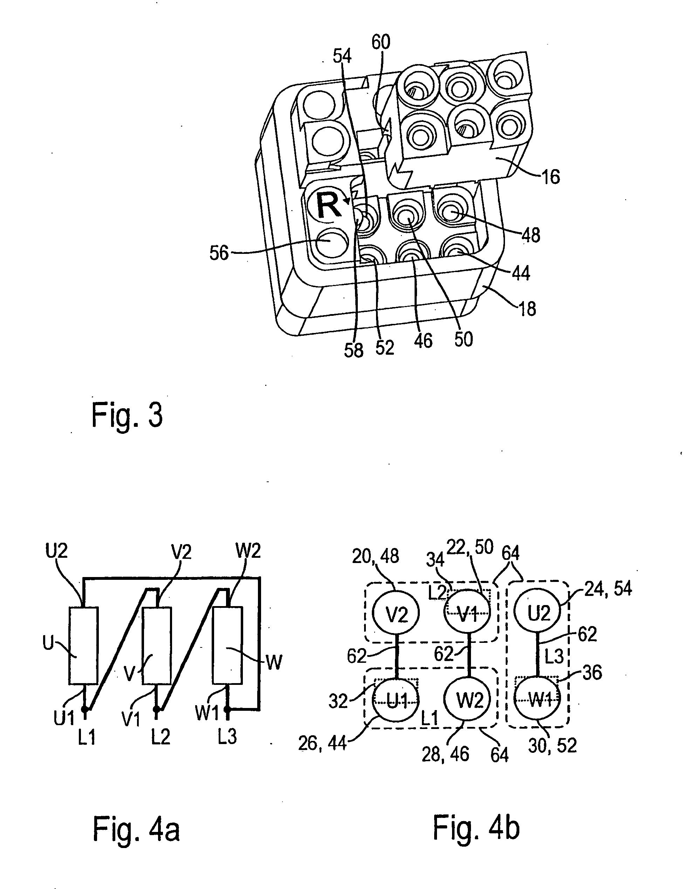

Figur 3 zeigt die Netzanschlusseinheit 18 von der Verbindungsmodulseite aus gesehen mit den sechs Phasenkontakten 44, 46, 48, 50, 52 und 54. Ein Kodierstück 56 ist eingelegt. Es ist mit einem "R" für rechtsdrehend beschriftet, und ein Pfeil deutet zusätzlich die Drehrichtung des Motors an. Das Verbindungsmodul 16, 16' kann bei eingesetztem Kodierstück 56 nur in einer Einbaulage eingeschoben werden, da eine Nase 58 am Kodierstück 56 mit einer Ausnehmung 60 am Verbindungsmodul 16, 16' kooperiert. Selbstverständlich sind auch andere dem Fachmann geläufige Kodierungsmöglichkeiten anwendbar.

Am Verbindungsmodul 16, 16' sind die Wicklungsverbindungskontakte sichtbar, die die Wicklungskontakte 20, 22, 24, 26, 28 und 30 der Motoranschlusseinheit 14 elektrisch kontaktieren können.

Drehstrommotoren werden je nach Anwendungsfall in einer sogenannten Dreieckschaltung oder in einer Sternschaltung betrieben. Innerhalb des Verbindungsmoduls 16, 16' sorgen nicht sichtbare Verdrahtungselemente für die gewünschte Verschaltung zwischen den Motorwicklungsenden und den Phasenleitungen.

Figur 4a zeigt das elektrische Schaltbild für eine Dreieckschaltung. Die drei Windungen U, V und W des Drehstrommotors sind mit ihren Enden dreieckförmig zusammengeschaltet, das heißt das Wicklungsende U2 der Motorwicklung U ist an den Wicklungsanfang W1 der Motorwicklung W geschaltet, das Wicklungsende W2 der Motorwicklung W ist mit dem Wicklungsanfang V1 der Motorwicklung V verbunden und das Wicklungsende V2 der Motorwicklung V ist mit dem Wicklungsanfang U1 der Motorwicklung U verbunden. Die Phasenleitungen liegen an den jeweiligen Wicklungsanfängen an, das heißt die Phasenleitung L1 ist mit dem Wicklungsanfang U1 verbunden, die Phasenleitung L2 ist mit dem Wicklungsanfang V1 verbunden und die Phasenleitung L3 ist mit dem Wicklungsanfang W1 verbunden.

Figur 4b zeigt in einer schematischen Draufsicht die Phasenkontakte 44, 46, 48, 50, 52 und 54 der Netzanschlusseinheit 18 als Kreise, wobei gestrichelte Linien 64 jeweils die zwei Phasenkontakte umschließen, die elektrisch parallel liegen und die gleiche Phasenleitung kontaktieren. Deckungsgleich zu den Phasenkontakten der Netzanschlusseinheit 18 liegen die Wicklungskontakte 20, 22, 24, 26, 28 und 30 der Motoranschlusseinheit 14. Zur besseren Verständlichkeit sind die den Phasenkontakten zugeordneten Phasenleitungen L1, L2 und L3 in Figur 4b direkt eingetragen, ebenso die Wicklungsenden U1, U2, V1, V2, W1 und W2, die an den Wicklungskontakten angeschlossen sind. Die Wicklungskontakte 20 bis 30 der Motoranschlusseinheit 14 sind in zwei zueinander punktsymmetrischen Gruppen positioniert, das heißt drei Wicklungskontakte liegen jeweils nebeneinander und die anderen drei Wicklungskontakte liegen auf einer dazu parallelen Geraden ebenfalls nebeneinander. Gemäß Figur 4b liegen in der ersten Gruppe der Wicklungsanfang U1 der Motorwicklung U, das Wicklungsende W2 der Motorwicklung W und der Wicklungsanfang der Motorwicklung W1 nebeneinander. Darüber angeordnet in punktsymmetrischer Anordnung dazu liegen das Wicklungsende V2 der Wicklung V, daneben der Wicklungsanfang V1 der Wicklung V sowie das Wicklungsende U2 der Wicklung U.

In der schematischen Darstellung ist eine deckungsgleiche Darstellung der Phasenkontakte und der Wicklungskontakte gewählt worden. In der praktischen Ausführung müssen die Kontakte nicht deckungsgleich sein, da der elektrische Kontakt über das dazwischenliegende Verbindungsmodul hergestellt wird.

Die drei Phasenverbindungskontakte 32, 34, 36 des Verbindungsmoduls 16 sind als Rechtecke eingezeichnet. Die gezeigte Einbaulage entspricht der in Figur 1 dargestellten Einbaulage. Bei dem Verbindungsmodul 16 handelt es sich um ein Verbindungsmodul zum Verbinden in Dreieckschaltung. Daher sind Verdrahtungselemente 62 innerhalb des Verbindungsmoduls enthalten, die jeweils gegenüberliegende Kontakte miteinander verbinden.

Der Phasenverbindungskontakt 32 des Verbindungsmoduls 16 stellt einen elektrischen Kontakt zu dem Phasenkontakt 44 der Netzanschlusseinheit 18 her, der wiederum mit der Phasenleitung L1 des Drehstromnetzes verbunden ist. Der Phasenverbindungskontakt 32 ist innerhalb des Verbindungsmoduls 16 mit dem gegenüberliegenden Wicklungsverbindungskontakt elektrisch verbunden, der über die Motoranschlusseinheit mit dem Wicklungsanfang U1 verbunden ist. Damit liegt U1 an der Phase L1. Über ein Verdrahtungselement 62 ist U1 ferner mit V2 verbunden.

Der Phasenverbindungskontakt 34 des Verbindungsmoduls 16 stellt einen elektrischen Kontakt zu dem Phasenkontakt 50 der Netzanschlusseinheit 18 her, der wiederum mit der Phasenleitung L2 des Drehstromnetzes verbunden ist. Der Phasenverbindungskontakt 34 ist innerhalb des Verbindungsmoduls 16 mit dem gegenüberliegenden Wicklungsverbindungskontakt elektrisch verbunden, der über die Motoranschlusseinheit mit dem Wicklungsanfang V1 verbunden ist. Damit liegt V1 an der Phase L2. Über ein Verdrahtungselement 62 ist V1 ferner mit W2 verbunden.

Der Phasenverbindungskontakt 36 des Verbindungsmoduls 16 stellt einen elektrischen Kontakt zu dem Phasenkontakt 52 der Netzanschlusseinheit 18 her, der wiederum mit der Phasenleitung L3 des Drehstromnetzes verbunden ist. Der Phasenverbindungskontakt 36 ist innerhalb des Verbindungsmoduls 16 mit dem gegenüberliegenden Wicklungsverbindungskontakt elektrisch verbunden, der über die Motoranschlusseinheit mit dem Wicklungsanfang W1 verbunden ist. Damit liegt W1 an der Phase L3. Über ein Verdrahtungselement 62 ist W1 ferner mit U2 verbunden.

Damit ergibt die Kontaktierung gemäß Figur 4b eine Verschaltung der Motorwicklungen untereinander und mit den Phasen des Drehstromnetzes gemäß dem Schaltbild von Figur 4a.

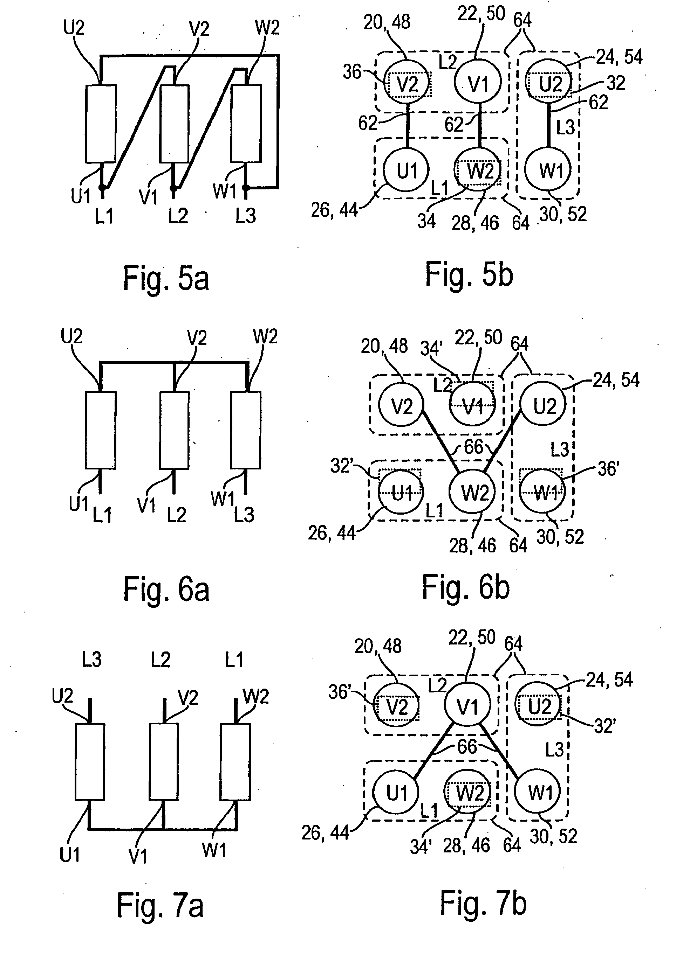

Figur 5a zeigt ebenfalls die Verschaltung der Motorwicklungen U, V und W für eine Dreieckschaltung, aber mit anderer Drehrichtung. Das heißt die Phasenleitung L1 und L2 sind gegenüber der Darstellung in Figur 4a miteinander vertauscht.

Figur 5b zeigt die entsprechende Zuordnung der Kontakte der Motoranschlusseinheit 14, der Netzanschlusseinheit 18 und des Verbindungsmoduls 16. Da es sich wiederum um eine Dreieckschaltung handelt, wird das gleiche Verbindungsmodul 16 wie im Fall der Schaltung gemäß Figur 4a verwendet. Das bedeutet, dass die Verdrahtungselemente 62 jeweils gegenüberliegende Kontakte miteinander verbinden. Das Verbindungsmodul 16 wurde im Verhältnis zu Figur 4b um eine Achse, die zwischen Motoranschlusseinheit 14 und Netzanschlusseinheit 18 entlang der Verbindungsrichtung verläuft, um 180° verdreht eingebaut. Daher kontaktiert jetzt der Phasenverbindungskontakt 36 des Verbindungsmoduls 16 über den Phasenkontakt 48 die Phasenleitung L2, der Phasenverbindungskontakt 34 des Verbindungsmoduls 16 kontaktiert den Phasenkontakt 46, der mit der Phasenleitung L1 verbunden ist, und der Phasenverbindungskontakt 32 des Verbindungsmoduls kontaktiert den Phasenkontakt 54 der Netzanschlusseinheit 18, der mit der Phasenleitung L3 verbunden ist. Die Lage der Wicklungskontakte ist unverändert, d.h. die Phase L2 liegt damit an V2 und über ein Verdrahtungselement 62 an U1, die Phase L1 liegt an W2 und über ein Verdrahtungselement 62 an V1 und die Phase L3 liegt an U2 und über ein Verdrahtungselement 62 an W1. Damit ist wie gewünscht die Drehrichtung des Motors umgekehrt. Die für diese Drehrichtung gewünschte Einbaulage des Verbindungsmoduls kann wiederum mit einem entsprechenden Kodierstück 56 fixiert werden.

Figur 6a zeigt das elektrische Schaltbild für eine Sternschaltung der Motorwicklungen U, V und W. Hierfür sind die Motorwicklungsenden U2, V2 und W2 elektrisch verbunden, während die Phasenleitung L1 am Wicklungsanfang U1 anliegt, die Phasenleitung L2 am Wicklungsanfang V1 und die Phasenleitung L3 am Wicklungsanfang W1.

Entsprechend zeigt Figur 6b die Konfiguration der Anschlusskontakte auf der Motoranschlusseinheit 14, dem Verbindungsmodul 16' und der Netzanschlusseinheit 18. Das Verbindungsmodul 16 ist ausgetauscht worden gegen ein Verbindungsmodul 16' für eine Sternschaltung, das äußerlich dem Verbindungsmodul 16 entspricht. Das Verbindungsmodul 16' enthält Verdrahtungselemente 66, die die Wicklungsverbindungskontakte miteinander verbinden, die nicht mit Phasenverbindungskontakten 32, 34, 36 verbunden sind.

Die Anordnung der Wicklungsenden U1, U2, V1, V2, W1 und W2 an der Motoranschlusseinheit 14 und der Phasenleitungen an der Netzanschlusseinheit 18 bleibt gegenüber Figuren 4b und 5b unverändert. In der in Figur 6b dargestellten Einbaulage kontaktiert ein rechteckig dargestellter Phasenverbindungskontakt 32' des Verbindungsmoduls 16' den Phasenkontakt 44 der Netzanschlusseinheit 18 und damit die Phasenleitung L1 und den Wicklungsanfang U1 über die Motoranschlusseinheit, ein Phasenverbindungskontakt 34' des Verbindungsmoduls 16' kontaktiert den Phasenkontakt 50 der Netzanschlusseinheit 18 und damit die Phasenleitung L2 und den Wicklungsanfang V1, und ein Phasenverbindungskontakt 36' des Verbindungsmoduls 16' kontaktiert den Phasenkontakt 52 der Netzanschlusseinheit 18 und damit die Phasenleitung L3 und den Wicklungsanfang W1. Die Wicklungsenden V2, W2 und U2 werden nicht an eine Phasenleitung angeschlossen, sie sind aber über Verdrahtungselemente 66 miteinander verbunden. Damit wird die in Figur 6a dargestellte elektrische Verschaltung erreicht.

Figur 7a zeigt das elektrische Schaltbild für die Verschaltung der Motorwicklungen U, V und W für eine Sternschaltung mit einer im Verhältnis zu der Schaltung in Figur 6a umgekehrten Drehrichtung. Die Wicklungsanfänge U1, V1 und W1 sind elektrisch miteinander verbunden, während das Wicklungsende U2 mit der Phasenleitung L3, das Wicklungsende V2 mit der Phasenleitung L2 und das Wicklungsende W2 mit der Phasenleitung L1 verbunden ist.

Figur 7b zeigt die Kontaktierung mit dem Verbindungsmodul 16', das entlang einer Achse in Verbindungsrichtung um 180° verdreht wurde. Damit verbinden jetzt die Verdrahtungselemente 66 elektrisch die Wicklungsanfänge U1, V1 und W1 miteinander. In der in Figur 7b dargestellten Einbaulage kontaktiert der rechteckig dargestellter Phasenverbindungskontakt 32' des Verbindungsmoduls 16' den Phasenkontakt 54 der Netzanschlusseinheit 18 und damit die Phasenleitung L3 und das Wicklungsende U2 über die Motoranschlusseinheit, der Phasenverbindungskontakt 34' des Verbindungsmoduls 16' kontaktiert den Phasenkontakt 46 der Netzanschlusseinheit 18 und damit die Phasenleitung L1 und das Wicklungsende W2, und der Phasenverbindungskontakt 36' des Verbindungsmoduls 16' kontaktiert den Phasenkontakt 48 der Netzanschlusseinheit 18 und damit die Phasenleitung L2 und das Wicklungsende V2.

Auch hier kann die Orientierung des Verbindungsmoduls durch ein Kodierstück 56 fixiert werden.

Es ist damit in einfacher Weise möglich, einen Anschluss des Drehmotors an ein Drehstromnetz vorzunehmen, ohne dass Anschlussleitungen umgeklemmt werden müssen. Die Unterscheidung zwischen Dreieckschaltung und Sternschaltung erfolgt durch die Wahl des geeigneten Verbindungsmoduls 16, 16' und die Drehrichtungsumkehr erfolgt durch die Einbaulage des Verbindungsmoduls. Um das Verbindungsmodul umzudrehen, müssen die Motoranschlussleitungen und die Netzanschlussleitungen nicht gelöst werden, die Anschlussvorrichtung ist lediglich auseinanderzuziehen und das Verbindungsmodul umzudrehen, worauf die Anschlussvorrichtung wieder zusammengesetzt werden kann. Die gesamte Anschlussvorrichtung kann im Kabel in Form einer Steckverbindung realisiert werden, so dass eine Änderung der Schaltung und/oder der Drehrichtung vor Ort ohne Werkzeug möglich ist.

### Zweites Ausführungsbeispiel

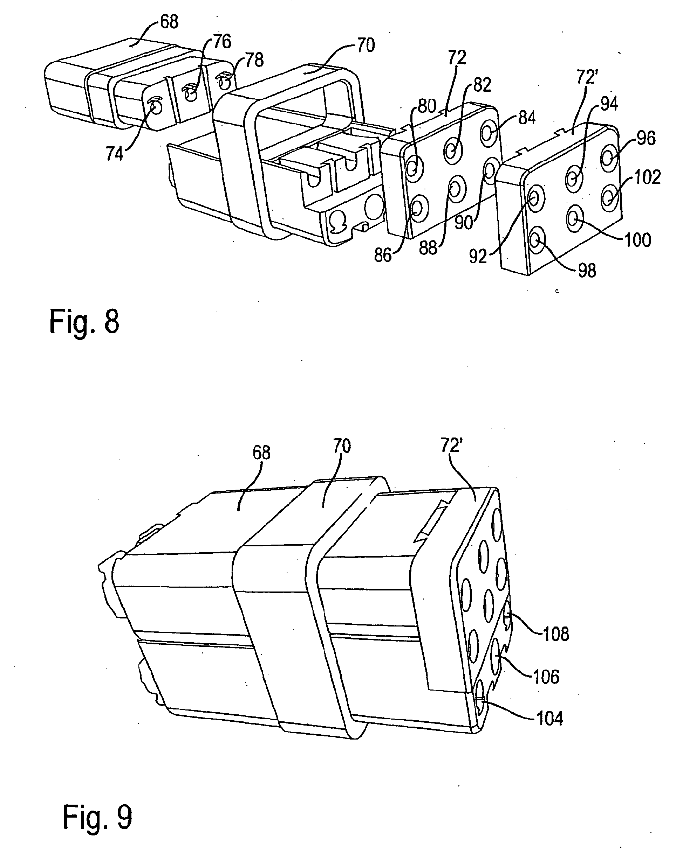

Figur 8 zeigt in einer schematischen 3-D-Darstellung eine zweite Ausführungsform der erfindungsgemäßen Anschlussvorrichtung mit einer Netzanschlusseinheit 68, einem Verbindungsmodul 70 und zwei Brückenmodulen 72, 72' sowie einer nicht dargestellten Motoranschlusseinheit.

Die Netzanschlusseinheit 68 weist auf einer dem Verbindungsmodul zugewandten Seite drei Phasenkontakte 74, 76 und 78 auf. Die Phasenkontakte 74, 76 und 78 sind innerhalb der Netzanschlusseinheit 68 elektrisch mit drei nicht dargestellten Anschlüssen auf der vom Verbindungsmodul abgewandten Seite verbunden, an die die drei Phasenleitungen L1, L2 und L3 eines Drehstromnetzes anschließbar sind. Der Anschluss der Phasenleitungen L1, L2 und L3 kann vorzugsweise über Klemmfederverbindungen erfolgen. Die Netzanschlusseinheit kann in das Verbindungsmodul 70 in zwei um 180° in Einschubrichtung gegeneinander verdrehten Einbaulagen eingebaut werden.

Das Verbindungsmodul 70 umfasst ein austauschbares Brückenmodul, wobei Figur 8 ein erstes Brückenmodul 72 und ein zweites Brückenmodul 72' zeigt, die alternativ verwendet werden. Äußerlich sind die beiden Brückenmodule gleich aufgebaut. Sie unterscheiden sich durch nicht dargestellte Verdrahtungselemente dergestalt, dass mit dem Brückenmodul 72 eine Dreieckschaltung erreicht wird, während mit dem zweiten Brückenmodul 72' durch die darin enthaltenen Verdrahtungselemente die drei Motorwicklungen untereinander und mit den Phasenleitungen in Sternschaltung miteinander verbunden werden.

Die Brückenmodul 72, 72' weisen auf ihrer dem Verbindungsmodul 70 zugewandten Seite jeweils drei Phasenverbindungskontakte auf, mit denen sie direkt die drei Phasenkontakte 74, 76 und 78 der Netzanschlusseinheit 68 elektrisch kontaktieren. Auf der vom Verbindungsmodul 70 abgewandten Seite weisen die Brückenmodule 72, 72' jeweils 6 Wicklungsverbindungskontakte 80 bis 90, bzw. 92 bis 102 auf, die geeignet sind, Wicklungskontakte auf der nicht dargestellten Motoranschlusseinheit elektrisch zu kontaktieren. Die in Figur 8 oben liegenden Wicklungsverbindungskontakte 80, 82 und 84, bzw. 92, 94 und 96 sind jeweils elektrisch mit den ihnen gegenüberliegenden Phasenverbindungskontakten verbunden, während die unten liegenden Wicklungsverbindungskontakte 86, 88 und 90, bzw. 98, 100 und 102 je nach Brückenmodul in unterschiedlicher Weise mit den oben liegenden Wicklungsverbindungskontakten verbunden sind. In der Praxis kann aber auch auf die Anschlüsse 92, 94 und 96 verzichtet werden.

Beispielsweise kann im Fall des Brückenmoduls 72 über die Motoranschlusseinheit an den Wicklungsverbindungskontakt 80 der Wicklungsanfang U1, an den Wicklungsverbindungskontakt 82 der Wicklungsanfang V1 und an den Wicklungsverbindungskontakt 84 der Wicklungsanfang W1 gelegt sein, während der Wicklungsverbindungskontakt 86 das Wicklungsende W2, der Wicklungsverbindungskontakt 88 das Wicklungsende U2 und der Wicklungsverbindungskontakt 90 das Wicklungsende V2 über die Motoranschlusseinheit kontaktiert.

Für eine Dreieckschaltung weist dann das Brückenmodul 72 mehrere Verdrahtungselemente auf, die die Wicklungsverbindungskontakte 80 und 86, die Wicklungsverbindungskontakte 82 und 88 und die Wicklungsverbindungskontakte 84 und 90 jeweils miteinander verbinden, um so eine Kontaktierung U1-W2, V1-U2 und W1-V2 zu erreichen.

Entsprechend hat für eine Sternschaltung das Brückenmodul 72' die Wicklungsverbindungskontakte 92, 94 und 96 in einer oberen Reihe, die ebenso wie im Fall des Brückenmoduls 72 den Wicklungsanfängen U1, V1 und W1 zugeordnet sind, und die Wicklungsverbindungskontakte 98, 100 und 102 in einer unteren Reihe, die entsprechend den Anschlüssen W2, U2 und V2 zugeordnet sind. Das Brückenmodul 72' enthält Verdrahtungselemente, die die unteren drei Wicklungsverbindungskontakte 98, 100 und 102, also W2-U2-V2 miteinander verbinden, sodass sich eine Sternschaltung ergibt.

Der Anschluss der Motorwicklungsenden an der Motoranschlusseinheit bleibt also immer gleich, vorzugsweise ist ein Crimpanschluss für den Anschluss vorgesehen. Durch Austausch des Brückenmoduls kann auch in dieser Ausführungsform einfach zwischen Dreieckschaltung und Sternschaltung gewechselt werden, ohne dass ein Umklemmen der Anschlüsse notwendig ist.

Für eine Änderung der Drehrichtung des Motors, unabhängig vom verwendeten Brückenmodul, ist in der zweiten Ausführungsform vorgesehen, dass die Netzanschlusseinheit 68 in zwei um 180° gegeneinander verdrehten Lagen einbaubar ist, sodass hierdurch die Drehrichtungsumkehr des angeschlossenen Drehstrommotors erreicht wird. Beispielsweise sei der Phasenkontakt 74 über die Netzanschlusseinheit 68 mit der Phasenleitung L1 verbunden, der Phasenkontakt 76 mit der Phasenleitung L2 und der Phasenkontakt 78 mit der Phasenleitung L3. In der in Figur 8 dargestellten Einbaulage ist dann bei Verwendung des Brückenmoduls 72 die Phasenleitung L1 mit dem Wicklungsverbindungskontakt 80 und damit mit dem Wicklungsanfang U1 verbunden, die Phasenleitung L2 mit dem Wicklungsverbindungskontakt 82 und damit mit dem Wicklungsanfang V1 verbunden und die Phasenleitung L3 mit dem Wicklungsverbindungskontakt 84 und damit mit dem Wicklungsanfang W1 verbunden. Bei einer Drehung der Netzanschlusseinheit um 180° kontaktiert die Phasenleitung L1 den Wicklungsanfang W1 und die Phasenleitung L3 den Wicklungsanfang U1, d.h. die Drehrichtung des Motors ist umgekehrt.

Entsprechendes gilt bei Verwendung des Brückenmoduls 72'.

Figur 9 zeigt die Anschlussvorrichtung gemäß Figur 8 in zusammengebauter Form mit einem angebauten Brückenmodul 72'. Auch die zweite Ausführungsform sieht mehr als die sechs Wicklungsanschlüsse auf der Motorseite vor, auf den Anschlüssen 104, 106 und 108 können beispielsweise die Schutzerde, der Neutralleiter und eine weitere Masseleitung des Drehstromnetzes mit dem Motor verbunden werden. Diese Leitungen haben für die vorliegende Erfindung keine Bedeutung und werden daher nicht weiter erläutert.

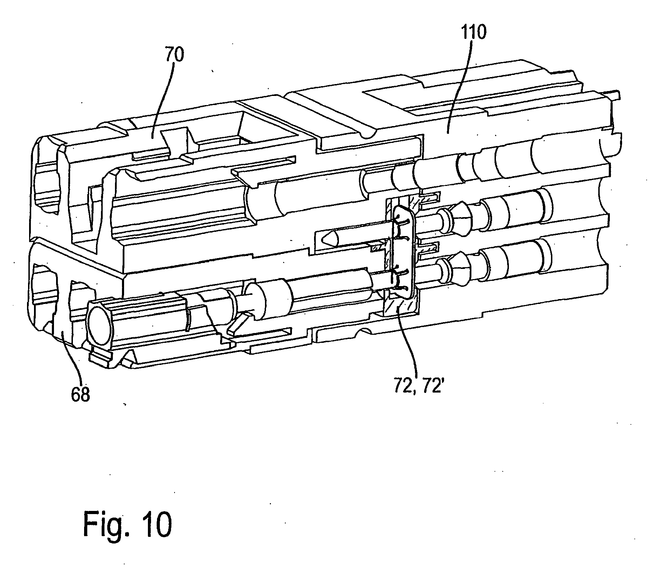

Figur 10 zeigt schematisch in einer 3-D-Darstellung eine Anschlussvorrichtung wie in Figur 8 und 9 dargestellt, die teilweise aufgeschnitten ist, mit einer getrennten Motoranschlusseinheit 110. Figur 10 zeigt das Verbindungsmodul 70 mit eingeschobener Netzanschlusseinheit 68 und einem Brückenmodul 72 oder 72'. Die Motoranschlusseinheit 110 ist mit dem Verbindungsmodul verbunden und umschließt das Brückenmodul 72, 72'. In Figur 10 auf der rechten Seite können damit die Motoranschlussleitungen fest mit der Netzanschlusseinheit verbunden werden, während auf der linken Seite die Phasenleitung des Drehstromnetzes fest mit der Netzanschlusseinheit 68 verbunden werden können.

Dem Fachmann sind verschiedene Möglichkeiten der Verbindung von Netzkabeln und Motoranschlussleitungen über Steckverbindungen bekannt. Vorzugsweise werden in beiden Ausführungsformen die Phasenleitungen über Klemmfederverbindungen mit der Netzanschlusseinheit verbunden.

Für den Anschluss der Motorleitungen an die Motoranschlusseinheit wird ein Crimpanschluss bevorzugt.

Beiden Ausführungsformen ist ebenfalls gemeinsam, dass sie einen im Wesentlichen quaderförmigen Aufbau zeigen. Insbesondere für die erste Ausführungsform ist für das Anschlussbild der Wicklungsenden nur entscheidend, dass die Anschlüsse in zwei Gruppen von je drei Anschlüssen angeordnet sind, die zueinander punktsymmetrisch sind, damit die Drehung des Verbindungsmoduls um 180° zu der gewünschten Drehrichtungsumkehr des Motors führt.

## Patentansprüche

1. Anschlussvorrichtung zum elektrischen Anschließen eines Drehstrommotors mit mindestens drei Wicklungen (U, V, W) an ein Drehstromnetz, wobei die Anschlussvorrichtung im Wesentlichen quaderförmig ist, umfassend
eine Motoranschlusseinheit (14) zum Anschließen der sechs Wicklungsenden (U1, U2, V1, V2, W1, W2) des Drehstrommotors, und
ein Verbindungsmodul (16), wobei
das Verbindungsmodul (16) Kontakte und Verdrahtungselemente enthält, die die sechs Wicklungsenden (U1, U2, V1, V2, W1, W2) in vorgegebener Weise mit den drei Phasenleitungen (L1, L2, L3) des Drehstromnetzes elektrisch verbinden,
**dadurch gekennzeichnet, dass**
das Verbindungsmodul (16) auswechselbar ist, wobei
ein erstes Verbindungsmodul (16) vorgesehen ist, das die drei Wicklungen (U, V, W) in einer Dreiecksschaltung verbindet, und ein zweites Verbindungsmodul (16') vorgesehen ist, das die drei Wicklungen (U, V, W) in einer Sternschaltung verbindet, und
ferner eine Netzanschlusseinheit (18) zum Anschließen der Phasenleitungen (L1, L2, L3) des Drehstromnetzes vorgesehen ist, wobei
das Verbindungsmodul (16) zwischen Netzanschlusseinheit (18) und Motoranschlusseinheit (14) angeordnet ist und das Verbindungsmodul, bzw. jedes der Verbindungsmodule (16, 16') entlang einer Verbindungsrichtung um 180° verdreht eingebaut werden kann, um damit die Drehrichtung des Drehstrommotors umzukehren, und wobei
die Netzanschlusseinheit (18) auf einer dem Verbindungsmodul abgewandten Seite drei Anschlüsse (38, 40, 42) aufweist und auf der dem Verbindungsmodul zugewandten Seite sechs Phasenkontakte (44, 46, 48, 50, 52, 54) aufweist, die jeweils paarweise mit den Anschlüssen (38, 40, 42) elektrisch leitend verbunden sind.

2. Anschlussvorrichtung zum elektrischen Anschließen eines Drehstrommotors mit mindestens drei Wicklungen (U, V, W) an ein Drehstromnetz, wobei die Anschlussvorrichtung im Wesentlichen quaderförmig ist, umfassend
eine Motoranschlusseinheit (110) zum Anschließen der sechs Wicklungsenden (U1, U2, V1, V2, W1, W2) des Drehstrommotors,
ein Verbindungsmodul (70), wobei
das Verbindungsmodul (70) Kontakte und Verdrahtungselemente enthält, die die sechs Wicklungsenden (U1, U2, V1, V2, W1, W2) in vorgegebener Weise mit den drei Phasenleitungen (L1, L2, L3) des Drehstromnetzes elektrisch verbinden,
**dadurch gekennzeichnet, dass**
eine Netzanschlusseinheit (68) zum Anschließen der Phasenleitungen (L1, L2, L3) des Drehstromnetzes vorgesehen ist, wobei
das Verbindungsmodul (70) zwischen der Netzanschlusseinheit (68) und der Motoranschlusseinheit (110) angeordnet ist,
die Netzanschlusseinheit (68) auf einer dem Verbindungsmodul zugewandten Seite drei Phasenkontakte (74, 76, 78) aufweist und auf der vom Verbindungsmodul abgewandten Seite drei Anschlüsse aufweist, an die die Phasenleitungen (L1, L2, L3) des Drehstromnetzes anschließbar sind;
das Verbindungsmodul (70) ein austauschbares Brückenmodul (72, 72') umfasst, das die Verdrahtungselemente enthält, wobei ein erstes Brückenmodul (72) vorgesehen ist, das Verdrahtungselemente enthält dergestalt, dass die drei Wicklungen (U, V, W) in einer Dreieckschaltung verbunden werden, und ein zweites Brückenmodul (72') vorgesehen ist, das Verdrahtungselemente enthält dergestalt, dass die drei Wicklungen (U, V, W) in einer Sternschaltung verbunden werden, und
wobei die Netzanschlusseinheit (68) an dem Verbindungsmodul (70) in zwei um 180° gegeneinander verdrehten Lagen anbaubar ist, um damit die Drehrichtung des Drehstrommotors umzukehren.

3. Anschlussvorrichtung gemäß Anspruch 1, wobei die Netzanschlusseinheit (18) für jede der drei Phasenleitungen (L1, L2, L3) einen Anschluss aufweist, der in Richtung des Verbindungsmoduls (16, 16') in zwei parallele Phasenkontakte (44, 46, 48, 50, 52, 54) verzweigt und das Verbindungsmodul, bzw. jedes der Verbindungsmodule jeweils nur einen der parallelen Phasenkontakte elektrisch kontaktiert.

4. Anschlussvorrichtung gemäß Anspruch 1 oder Anspruch 3, wobei
die Motoranschlusseinheit (14) auf der dem Verbindungsmodul (16, 16') zugewandten Seite Wicklungskontakte (20, 22, 24, 26, 28, 30) zu den sechs Wicklungsenden (U1, U2, V1, V2, W1, W2) aufweist, die in zwei Gruppen von je drei Wicklungskontakten angeordnet sind, die zueinander punktsymmetrisch liegen, wobei
in der ersten Gruppe der Wicklungsanfang (U1) einer ersten Wicklung (U), das Wicklungsende (W2) einer dritten Wicklung (W) und der Wicklungsanfang (W1) der dritten Wicklung (W) nebeneinander liegen, und
in der zweiten Gruppe liegt das Wicklungsende (U2) der ersten Wicklung (U) punktsymmetrisch zum Wicklungsanfang (U1) der ersten Wicklung (U), der Wicklungsanfang (V1) der zweiten Wicklung (V) liegt punktsymmetrisch zum Wicklungsende (W2) der dritten Wicklung (W) und das Wicklungsende (V2) der zweiten Wicklung (V) liegt punktsymmetrisch zum Wicklungsanfang (W1) der dritten Wicklung (W).

5. Anschlussvorrichtung nach einem der vorangegangenen Ansprüche, wobei die Anschlussvorrichtung so gestaltet ist, dass die Phasenleitungen (L1, L2, L3) des Drehstromnetzes an der Netzanschlusseinheit (18, 68) fest angeschlossen werden können, vorzugsweise über Klemmfederverbindungen.

6. Anschlussvorrichtung nach einem der vorangegangenen Ansprüche, wobei die Anschlussvorrichtung so gestaltet ist, dass die sechs Wicklungsenden (U1, U2, V1, V2, W1, W2) an der Motoranschlusseinheit (14, 110) fest angeschlossen werden können, vorzugsweise als Crimpanschluss.

## Claims

1. A connecting device for electrically connecting a three-phase motor having at least three windings (U, V, W) to a three-phase network, the connecting device being substantially parallelepipedal, comprising
a motor connection unit (14) for connecting the six winding ends (U1, U2, V1, V2, W1, W2) of the three-phase motor, and
a coupling module (16), wherein
the coupling module (16) contains contacts and wiring elements electrically coupling the six winding ends (U1, U2, V1, V2, W1, W2) in a predefined manner to the three phase lines (L1, L2, L3) of the three-phase network,
**characterized in that**
the coupling module (16) is exchangeable,
a first coupling module (16) being provided which couples the three windings (U, V, W) in a delta connection, and a second coupling module (16') being provided which couples the three windings (U, V, W) in a star connection, and
further, a mains connection unit (18) is provided for connecting the phase lines (L1, L2, L3) of the three-phase network,
the coupling module (16) being arranged between the mains connection unit (18) and the motor connection unit (14), and the coupling module or each of the coupling modules (16, 16') being adapted to be installed so as to be rotated through 180° along a coupling direction to thus reverse the direction of rotation of the three-phase motor, and
the mains connection unit (18) having three terminals (38, 40, 42) on a side facing away from the coupling module and six phase contacts (44, 46, 48, 50, 52, 54) on the side facing the coupling module, which, in respective pairs, are electrically conductively coupled to the terminals (38, 40, 42).

2. A connecting device for electrically connecting a three-phase motor having at least three windings (U, V, W) to a three-phase network, the connecting device being substantially parallelepipedal, comprising
a motor connection unit (110) for connecting the six winding ends (U1, U2, V1, V2, W1, W2) of the three-phase motor,
a coupling module (70), wherein
the coupling module (70) contains contacts and wiring elements electrically coupling the six winding ends (U1, U2, V1, V2, W1, W2) in a predefined manner to the three phase lines (L1, L2, L3) of the three-phase network,
**characterized in that**
a mains connection unit (68) is provided for connecting the phase lines (L1, L2, L3) of the three-phase network,
the coupling module (70) being arranged between the mains connection unit (68) and the motor connection unit (110),
the mains connection unit (68) having three phase contacts (74, 76, 78) on a side facing the coupling module and three terminals on the side facing away from the coupling module, the phase lines (L1, L2, L3) of the three-phase network being adapted to be connected to the terminals;
the coupling module (70) comprising an exchangeable bridge module (72, 72') which contains the wiring elements, a first bridge module (72) being provided which contains wiring elements such that the three windings (U, V, W) are coupled in a delta connection, and a second bridge module (72') being provided which contains wiring elements such that the three windings (U, V, W) are coupled in a star connection, and
the mains connection unit (68) being adapted to be mounted to the coupling module (70) in two positions rotated through 180° with respect to each other to thus reverse the direction of rotation of the three-phase motor.

3. The connecting device according to claim 1, wherein the mains connection unit (18) has one terminal for each of the three phase lines (L1, L2, L3), the terminal branching in two parallel phase contacts (44, 46, 48, 50, 52, 54) in the direction to the coupling module (16, 16'), and the coupling module or each of the coupling modules each electrically contacting only one of the parallel phase contacts.

4. The connecting device according to claim 1 or claim 3, wherein
on the side facing the coupling module (16, 16'), the motor connection unit (14) has winding contacts (20, 22, 24, 26, 28, 30) to the six winding ends (U1, U2, V1, V2, W1, W2), which are arranged in two groups of three winding contacts each which are point symmetric to each other, wherein
in the first group, the winding beginning (U1) of a first winding (U), the winding end (W2) of a third winding (W), and the winding beginning (W1) of the third winding (W) are arranged side by side, and
in the second group, the winding end (U2) of the first winding (U) is point symmetric to the winding beginning (U1) of the first winding (U), the winding beginning (V1) of the second winding (V) is point symmetric to the winding end (W2) of the third winding (W), and the winding end (V2) of the second winding (V) is point symmetric to the winding beginning (W1) of the third winding (W).

5. The connecting device according to any of the preceding claims, wherein the connecting device is configured such that the phase lines (L1, L2, L3) of the three-phase network are adapted to be firmly connected to the mains connection unit (18, 68), preferably by means of clamping spring connections.

6. The connecting device according to any of the preceding claims, wherein the connecting device is configured such that the six winding ends (U1, U2, V1, V2, W1, W2) are adapted to be firmly connected to the motor connection unit (14, 110), preferably as a crimp connection.

## Revendications

1. Dispositif de raccordement pour le raccordement électrique d'un moteur triphasé présentant au moins trois enroulements (U, V, W) à un réseau triphasé, le dispositif de raccordement étant sensiblement parallélépipédique, comprenant
une unité de raccordement de moteur (14) pour le raccordement des six extrémités d'enroulement (U1, U2, V1, V2, W1, W2) du moteur triphasé, et
un module de liaison (16),
le module de liaison (16) contenant des contacts et des éléments de câblage qui relient les six extrémités d'enroulement (U1, U2, V1, V2, W1, W2) électriquement de manière prédéterminée aux trois lignes de phase (L1, L2, L3) du réseau triphasé,
**caractérisé en ce que**
le module de liaison (16) est échangeable,
un premier module de liaison (16) qui relie les trois enroulements (U, V, W) selon un couplage en triangle étant prévu, et un deuxième module de liaison (16') qui relie les trois enroulements (U, V, W) selon un couplage en étoile étant prévu, et
**en ce qu'**il est en outre prévu une unité de raccordement au réseau (18) pour le raccordement des lignes de phase (L1, L2, L3) du réseau triphasé,
le module de liaison (16) étant agencé entre l'unité de raccordement au réseau (18) et l'unité de raccordement de moteur (14), et le module de liaison ou chacun des modules de liaison (16, 16') étant apte à être monté le long d'un sens de liaison tourné de 180° pour ainsi inverser le sens de rotation du moteur triphasé, et
l'unité de raccordement au réseau (18) présentant d'un côté détourné du module de liaison trois raccordements (38, 40, 42) et du côté tourné vers le module de liaison six contacts de phase (44, 46, 48, 50, 52, 54) qui sont respectivement reliés par paires aux raccordements (38, 40, 42) de manière électriquement conductrice.

2. Dispositif de raccordement pour le raccordement électrique d'un moteur triphasé présentant au moins trois enroulements (U, V, W) à un réseau triphasé, le dispositif de raccordement étant sensiblement parallélépipédique, comprenant
une unité de raccordement de moteur (110) pour le raccordement des six extrémités d'enroulement (U1, U2, V1, V2, W1, W2) du moteur triphasé, et
un module de liaison (70),
le module de liaison (70) contenant des contacts et des éléments de câblage qui relient les six extrémités d'enroulement (U1, U2, V1, V2, W1, W2) électriquement de manière prédéterminée aux trois lignes de phase (L1, L2, L3) du réseau triphasé,
**caractérisé en ce que**
il est prévu une unité de raccordement au réseau (68) pour le raccordement des lignes de phase (L1, L2, L3) du réseau triphasé,
le module de liaison (70) étant agencé entre l'unité de raccordement au réseau (68) et l'unité de raccordement de moteur (110),
l'unité de raccordement au réseau (68) présentant d'un côté tourné vers le module de liaison trois contacts de phase (74, 76, 78) et du côté détourné du module de liaison trois raccordements auxquels les lignes de phase (L1, L2, L3) du réseau triphasé peuvent être raccordées,
le module de liaison (70) présentant un module en pont (72, 72') échangeable qui contient les éléments de câblage, un premier module en pont (72) étant prévu, lequel contient des éléments de câblage de telle sorte que les trois enroulements (U, V, W) sont reliés selon un couplage en triangle, et un deuxième module en pont (72') étant prévu, lequel contient des éléments de câblage de telle sorte que les trois enroulements (U, V, W) sont reliés selon un couplage en étoile, et
l'unité de raccordement au réseau (68) étant apte à être montée sur le module de liaison (70) dans deux positions tournées de 180° l'une par rapport à l'autre pour ainsi inverser le sens de rotation du moteur triphasé.

3. Dispositif de raccordement selon la revendication 1, l'unité de raccordement au réseau (18) présentant pour chacune des trois lignes de phase (L1, L2, L3) un raccordement qui se ramifie en direction du module de liaison (16, 16') en deux contacts de phase parallèles (44, 46, 48, 50, 52, 54), et le module de liaison ou chacun des modules de liaison contactant respectivement un seul des contacts de phase parallèles de manière électrique.

4. Dispositif de raccordement selon la revendication 1 ou la revendication 3, l'unité de raccordement de moteur (14) présentant du côté tourné vers le module de liaison (16, 16') des contacts d'enroulement (20, 22, 24, 26, 28, 30) vers les six extrémités d'enroulement (U1, U2, V1, V2, W1, W2), lesquels sont agencés en deux groupes de trois contacts d'enroulement chacun à symétrie ponctuelle l'un par rapport à l'autre,
dans le premier groupe, le début d'enroulement (U1) d'un premier enroulement (U), la fin d'enroulement (W2) d'un troisième enroulement (W), et le début d'enroulement (W1) du troisième enroulement (W) étant agencés les uns à côté des autres, et
dans le deuxième groupe, la fin d'enroulement (U2) du premier enroulement (U) étant disposée à symétrie ponctuelle par rapport au début d'enroulement (U1) du premier enroulement (U), le début d'enroulement (V1) du deuxième enroulement (V) étant disposé à symétrie ponctuelle par rapport à la fin d'enroulement (W2) du troisième enroulement (W), et la fin d'enroulement (V2) du deuxième enroulement (V) étant disposée à symétrie ponctuelle par rapport au début d'enroulement (W1) du troisième enroulement (W).

5. Dispositif de raccordement selon l'une des revendications précédentes, le dispositif de raccordement étant réalisé de telle sorte que les lignes de phase (L1, L2, L3) du réseau triphasé peuvent être raccordées de manière solidaire à l'unité de raccordement au réseau (18, 68), de préférence au moyen de liaisons par ressort de serrage.

6. Dispositif de raccordement selon l'une des revendications précédentes, le dispositif de raccordement étant réalisé de telle sorte que les six extrémités d'enroulement (U1, U2, V1, V2, W1, W2) peuvent être raccordées de manière solidaire à l'unité de raccordement de moteur (14, 110), de préférence sous forme de raccordement par sertissage.
